## (19) Europäisches Patentamt
### European Patent Office
### Office européen des brevets

(11) **EP 1 021 328 B1**

(12) **EUROPÄISCHE PATENTSCHRIFT**

(45) Veröffentlichungstag und Bekanntmachung des Hinweises auf die Patenterteilung:
**16.01.2002 Patentblatt 2002/03**

(51) Int Cl.$^7$: **B60T 13/72**, B60T 7/12, B60T 8/32

(21) Anmeldenummer: **98951482.3**

(22) Anmeldetag: **30.09.1998**

(86) Internationale Anmeldenummer:
**PCT/EP98/06223**

(87) Internationale Veröffentlichungsnummer:
**WO 99/17972 (15.04.1999 Gazette 1999/15)**

(54) **ELEKTRONISCH STEUERBARER BREMSKRAFTVERSTÄRKER**

ELECTRONICALLY CONTROLLABLE BRAKE BOOSTER

SERVOFREIN A COMMANDE ELECTRONIQUE

(84) Benannte Vertragsstaaten:
**DE ES FR GB IT**

(30) Priorität: **06.10.1997 DE 19744054**

(43) Veröffentlichungstag der Anmeldung:
**26.07.2000 Patentblatt 2000/30**

(73) Patentinhaber: **LUCAS INDUSTRIES PUBLIC LIMITED COMPANY**
**Solihull B90 4LA (GB)**

(72) Erfinder:
• **LINDEN, Christoph**
  **D-56179 Vallendar (DE)**
• **GODLEWSKY, Gregor**
  **D-56170 Bendorf (DE)**
• **MAACK, Lorenz**
  **D-70197 Stuttgart (DE)**

(74) Vertreter: **Schmidt, Steffen J., Dipl.-Ing. et al**
**Wuesthoff & Wuesthoff, Patent- und Rechtsanwälte, Schweigerstrasse 2**
**81541 München (DE)**

(56) Entgegenhaltungen:
WO-A-95/03196          WO-A-96/06763
DE-A- 19 527 493

**Beschreibung**

Die vorliegende Erfindung betrifft einen elektronisch steuerbaren Bremskraftverstärker. Insbesondere betrifft die vorliegende Erfindung einen elektronisch steuerbaren Bremskraftverstärker mit einer Unterdruckkammer und einer Druckkammer, die durch eine bewegliche Wand voneinander getrennt sind, einer Steuerventilanordnung, die mittels einer elektromagnetischen Betätigungseinrichtung betätigbar ist, und durch die eine Druckdifferenz zwischen der Druck- und der Unterdruckkammer einstellbar ist, wobei die Steuerventilanordnung in Abhängigkeit von einem durch die elektromagnetischen Betätigungseinrichtung fließenden Strom eine Haltestellung, in der der Strom in einem Bereich zwischen einem höheren Wert und einem niedrigeren Wert liegt, ohne daß die Steuerventilanordnung die Haltestellung verläßt, eine ersten Druckänderungsstellung, in der der Strom größer als der höhere Wert ist und eine zweiten Druckänderungsstellung, in der der Strom niedriger als der niedrige Wert ist, einnimmt.

Aus der DE 195 27 493 A1 ist eine elektromagnetische Betätigungseinrichtung bekannt, die eine mit einem Steuerstrom beaufschlagbare Magnetspule und einen der Magnetspule zugeordneten Anker aufweist, der dazu eingerichtet ist, Bewegungen auszuführen, die von einem durch die Magnetspule fließenden Steuerstrom und einer den Anker in entgegengesetzte Richtungen vorspannenden Federanordnung abhängig sind. Dabei ist eine Haltestellung als Stellgröße definiert, die der Anker bei einem Haltestrom durch die Magnetspule einnimmt. Dieser durch die Magnetspule fließende Haltestrom ist auf einen höheren Wert oder auf einen niedrigeren Wert veränderbar, ohne daß der Anker die Haltestellung verläßt.

Außerdem sind der höhere sowie der niedrigere Stromwert so bemessen, daß Störungseinflüsse auf die den Anker betätigenden Magnet- und Federkräfte den Anker nicht in eine von der Haltestellung unterschiedliche betätigte Stellung bringen.

Dazu wird der höhere Stromwert in der Weise bestimmt, daß eine mit der Position des Ankers in der Haltestellung in Beziehung stehenden Größe bestimmt wird; der Steuerstrom um einen vorbestimmten Stromschritt solange schrittweise erhöht wird und der Steuerstrom an die Magnetspule der elektromagnetischen Betätigungseinrichtung als Stellgröße ausgegeben wird, bis sich die mit der Position des Ankers in der Haltestellung in Beziehung stehende Größe um einen vorherbestimmten Wert in Richtung der zweiten betätigten Stellung ändert.

Der niedrigere Stromwert wird in der Weise bestimmt, daß eine mit der Position des Ankers in der Haltestellung in Beziehung stehende Größe bestimmt wird; der Steuerstrom um einen vorbestimmten Stromschritt schrittweise solange verringert wird und der Steuerstrom an die Magnetspule der elektromagnetischen Betätigungseinrichtung als Stellgröße ausgegeben wird, bis sich die mit der Position des Ankers in der Haltestellung in Beziehung stehende Größe um einen vorherbestimmten Wert in Richtung der ersten betätigten Stellung ändert.

Außerdem ist aus diesem Dokument bekannt, daß die Steuerventilanordnung sicher in die Haltestellung bringbar ist, wenn für den Haltestrom der arithmetische Mittelwert der Ströme gewählt wird.

Allerdings ist das in der DE 195 27 493 A1 behandelte "Lernen der Arbeitspunkte" darauf beschränkt, daß die maßgebenden Ströme für die untere Grenze und für die obere Grenze bei jedem Fahrtantritt beim Einschalten der Zündung oder während der Fahrt in regelmäßigen Zeitabständen gelernt und abgespeichert werden. Bei einer Ansteuerung der Steuerventilanordnung werden die auf diese Weise gelernten Ströme zur Vorgabe der ersten Stellgröße verwendet, um ein ausreichendes Regelverhalten zu erzielen.

Weiterhin wird dabei die an der beweglichen Wand des Bremskraftverstärkers wirkende Druckdifferenz, für die je nach Ansteuerwunsch unterschiedliche Werte eingestellt werden, quantitativ nicht berücksichtigt.

Die an der beweglichen Wand eingestellte Druckdifferenz wirkt nämlich unmittelbar auch auf den Ventilkörper, den Ventilsitz sowie das Ventilelement, was auch zu einer Verschiebung der Ströme für die untere Grenze und für die obere Grenze führt.

Die Erfindung behandelt also die Problematik, die sich durch die Verlagerung der oberen und unteren Stromwerte ergibt, welche notwendig sind, um die Steuerventilanordnung in ihrer Haltestellung zu halten.

Die Aufgabe der vorliegenden Erfindung besteht darin, diesen Nachteil zu beheben, so daß das Regelverhalten weiter verbessert ist.

Zur Lösung schlägt die Erfindung nun vor, daß durch geeignete Mittel während einer Regelung bei jedem Wechsel der Steuerventilanordnung aus der Haltestellung in die erste oder die zweite Druckänderungsstellung oder bei jedem Wechsel aus der ersten oder der zweiten Druckänderungsstellung in die Haltestellung der Stromwert erfaßt wird, bei dem der jeweilige Wechsel tatsächlich stattfindet, und dieser erfaßte Stromwert für die Festlegung des höheren Wertes bzw. des niedrigeren Wertes der die Haltestellung definierenden Ströme für einen zukünftigen entsprechenden Wechsel der Steuerventilanordnung herangezogen wird.

Bei einer bevorzugten Ausführungsform der Erfindung ist die erste Druckänderungsstellung eine Druckaufbaustellung, und die zweite Druckänderungsstellung eine Druckabbaustellung. Es ist jedoch in Abhängigkeit von der Ausgestaltung der Steuerventilanordnung bzw. deren Verbindung mit der Unterdruck bzw. Druckkammer die umgekehrte Ausgestaltung möglich.

In einer vorteilhaften Ausführungsform der Erfindung wird durch die geeigneten Mittel der jeweilige erfaßte Stromwert (I) für die Festlegung des höheren Wertes ($I_{AUFBAU}$) und bzw. des niedrigeren Wertes ($I_{ABBAU}$) der die Haltestellung definierenden Ströme für einen zukünftigen Wechsel der Steuerventilanordnung aus der Haltestellung in die erste oder die zweite Druckänderungsstellung, oder bei einem zukünftigen Wechsel aus der ersten oder der zweiten Druckänderungsstellung in die Haltestellung während eines laufenden Regelvorganges herangezogen.

Alternativ dazu kann auch durch die geeigneten Mittel der jeweilige erfaßte Stromwert für die Festlegung des höheren Wertes bzw. des niedrigeren Wertes der die Haltestellung definierenden Ströme für einen zukünftigen Wechsel der Steuerventilanordnung aus der Haltestellung in die erste oder die zweite Druckänderungsstellung oder bei einem zukünftigen Wechsel aus der ersten oder der zweiten Druckänderungsstellung in die Haltestellung nach Beendigung des laufenden Regelvorganges in einem zukünftigen Regelvorgang herangezogen werden.

In einer weiteren vorteilhaften Ausgestaltung wird durch die geeigneten Mittel der jeweilige erfaßte Stromwert für die Festlegung des höheren Wertes bzw. des niedrigeren Wertes der die Haltestellung definierenden Ströme im Rahmen einer gewichteten Mittelwertbildung mit weiteren erfaßten Stromwerten zur Bildung eines gemittelten Stromwertes herangezogen.

Außerdem kann es vorteilhaft sein, wenn durch die geeigneten Mittel der jeweilige erfaßte Stromwert für die Festlegung des höheren Wertes bzw. des niedrigeren Wertes der die Haltestellung definierenden Ströme im Rahmen einer gleitenden Mittelwertbildung mit weiteren erfaßten Stromwerten zur Bildung eines gemittelten Stromwertes herangezogen wird.

Um übermäßige Abweichungen vom Regelfall auszuschließen und dennoch schleichende Änderungen (aufgrund von Reibung, Verschleiß, Temperatureinflüssen etc.) zu erkennen und zu berücksichtigen, ist es vorteilhaft, wenn durch die geeigneten Mittel überprüft wird, ob der jeweilige erfaßte Stromwert innerhalb eines vorbestimmten Toleranzbandes liegt oder mit einer derzeitigen Veränderungstendenz übereinstimmt, bevor der jeweilige erfaßte Stromwert für die Festlegung des höheren Wertes bzw. des niedrigeren Wertes der die Haltestellung definierenden Ströme zur Bildung eines gemittelten Stromwertes herangezogen wird.

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnungen erläutert.

Fig. 1 zeigt schematisch eine Fahrzeugbremsanlage mit einem elektronisch steuerbaren Bremskraftverstärker.

Fig. 2 zeigt schematisch einen einfachen Regelkreis zum Betrieb eines elektronisch steuerbaren Bremskraftverstärkers.

Fig. 3 zeigt schematisch ein Diagramm zur Erläuterung der Steuerkennlinie eines elektronisch steuerbaren Bremskraftverstärkers.

Fig. 4 zeigt schematisch ein Flußdiagramm zur Erläuterung des Betriebes des erfindungsgemäßen elektronisch steuerbaren Bremskraftverstärkers.

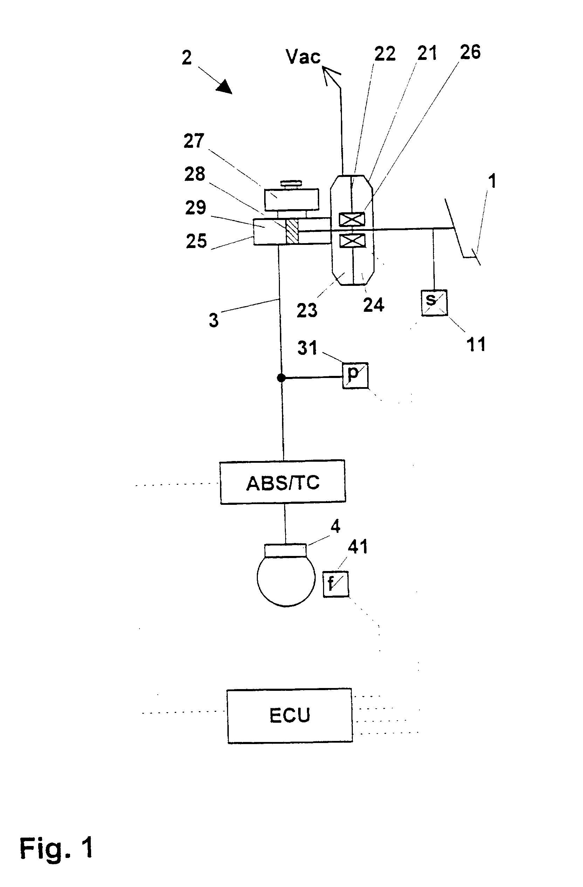

Bei der in Fig. 1 schematisch dargestellten Fahrzeugbremsanlage dient ein Bremspedal 1 dazu, über ein Betätigungselement eine Bremsdruckgebereinheit 2 zu betätigen. Die Bremsdruckgebereinheit 2 weist einen Bremszylinder 25 auf, in dem ein Kolben 28 eine Druckkammer 29 begrenzt. Die Druckkammer 29 wird von einem Reservoir 27 mit Bremsfluid versorgt. Von der Druckkammer 29 führt eine Bremsleitung 3 zu einer Radbremse 4 des Fahrzeugs.

In der Bremsleitung 3 ist eine Antiblockier- und/oder Antriebsschlupfregeleinrichtung ABS/TC zwischen der Bremsdruckgebereinheit 2 und der Radbremse 4 angeordnet. Die Antiblokkier- und/oder Antriebsschlupfregeleinrichtung ABS/TC umfaßt in bekannter Weise unter anderem Ventil- und Pumpenanordnungen, die von einer elektronischen Steuereinheit ECU angesteuert werden, um den Druck in der Radbremse 4 zu modulieren. Dies geschieht in Abhängigkeit des Drehverhaltens eines der Radbremse 4 zugeordneten Fahrzeugrades, das mittels eines Sensors 41 erfaßt und der elektronischen Steuereinheit ECU zugeführt wird.

Die Bremsdruckgebereinheit 2 weist zur Verstärkung der vom Fahrer über das Bremspedal 1 eingeleiteten Betätigungskraft einen Bremskraftverstärker 21 auf. Eine bewegliche Wand 22 unterteilt den Bremskraftverstärker 21 in eine Unterdruckkammer 23 und eine Druckkammer 24. Zur Erzeugung des Unterdrucks ist die Unterdruckkammer an eine nicht näher dargestellte Unterdruckquelle Vac angeschlossen. Bei einem mit einem Ottomotor ausgerüsteten Fahrzeug steht hierfür das im Ansaugrohr prinzipbedingt erzeugte Vakuum zur Verfügung. Dagegen ist bei einem mit einem Diesel- oder Elektromotor angetriebenen Fahrzeug eine zusätzliche Vakuumpumpe als Unterdruckquelle Vac notwendig. Bei einer Betätigung des Bremspedals 1 funktioniert der Bremskraftverstärker in bekannter Weise dadurch, daß die Druckkammer 24 mit Atmosphärendruck beaufschlagt wird, so daß an der beweglichen Wand 22 eine Druckdifferenz wirkt, die die am Bremspedal 1 eingeleitete Betätigungskraft untertützt. Im unbetätigten Zustand sind die Unterdruckkammer 23 und die Druckkammer 24 miteinander verbunden und somit druckausgeglichen, so daß an der beweglichen Wand 22 keine Druckdifferenz wirksam ist.

Der Bremskraftverstärker 21 ist über eine Elektromagnetanordnung 26 auch elektronisch steuerbar. Die elektronische Steuerbarkeit des Bremskraftverstärkers 21 ermöglicht es Bremsvorgänge auch automatisch, also unabhängig von einer Betätigung des Bremspedals 1 auszuführen. Dies kann zur Ausführung beispielsweise einer Antriebsschlupfregelung, einer Fahrdynamikregelung oder einer Abstandsregelung dienen. Eine Sensoreinrichtung 11 ist vorgesehen, um mit der Betätigung des Bremspedals 1 in Beziehung stehende Größen, wie beispielsweise den Pedalweg, die Pedalkraft oder die Pedalbetätigungsgeschwindigkeit, für die Auswertung in der elektronischen Steuereinheit ECU zu erfassen, um auch Bremsungen in Notsituationen, wobei zum Beispiel die Überschreitung einer bestimmten Pedalbetätigungsgeschwindigkeit als Kriterium dient, auszuführen.

Dazu betätigt die Elektromagnetanordnung 26 ein hier nicht näher dargestelltes Steuerventil, um den Bremskraftverstärker 21 in unterschiedliche Steuerstellungen (I., II., III.) zu bringen:

- in eine erste sogenannte "Aufbaustellung" (I.), in der die Verbindung der Unterdruckkammer 23 mit der Druckkammer 24 gesperrt und die Verbindung der Druckkammer 24 zur Atmosphäre geöffnet ist, so daß an der beweglichen Wand 22 eine Druckdifferenz aufgebaut bzw. erhöht wird,
- oder in eine zweite sogenannte "Haltestellung" (II.), in der die Verbindung der Unterdruckkammer 23 mit der Druckkammer 24 gesperrt und die Verbindung der Druckkammer 24 zur Atmosphäre gesperrt ist, so daß eine an der beweglichen Wand 22 wirkende Druckdifferenz aufrechterhalten wird,
- oder in eine sogenannte "Abbaustellung" (III.), in der die Verbindung der Unterdruckkammer 23 mit der Druckkammer 24 geöffnet und die Verbindung der Druckkammer 24 zur Atmosphäre gesperrt ist, so daß über einen Druckausgleichsvorgang eine an der beweglichen Wand 22 wirkende Druckdifferenz abgebaut wird.

Um das Steuerventil zwecks Modulation der Druckdifferenz an der beweglichen Wand 22 in die unterschiedlichen Steuerstellungen (I., II., III.) zu bringen, bestromt die elektronische Steuereinheit ECU die Elektromagnetanordnung 26 mit einem Steuerstrom $I_{SOLL}$, wobei die Variation des Steuerstroms $I_{SOLL}$ beispielsweise durch Pulsweitenmodulation erfolgt. Dabei wird auf den Anker der Elektromagnetanordnung 26 eine Magnetkraft ausgeübt, die eine Positionierung des Ankers bewirkt, entsprechend der sich dann die Steuerstellungen (I., II., III.) ergeben.

Der in der Druckkammer 29 des Bremszylinders 25 erzeugte und in die Bremsleitung 3 eingeleitete Bremsdruck $P_{IST}$ wird mittels eines Sensors 31 erfaßt und an die elektronische Steuereinheit ECU weitergeleitet, um den Bremsdruck $P_{IST}$ in Abhängigkeit von einem gewünschten Druckwert und/oder Druckverlauf $P_{SOLL}$ durch Verstellen des die Elektromagnetanordnung 26 bestromenden Steuerstromes $I_{SOLL}$ zu regeln.

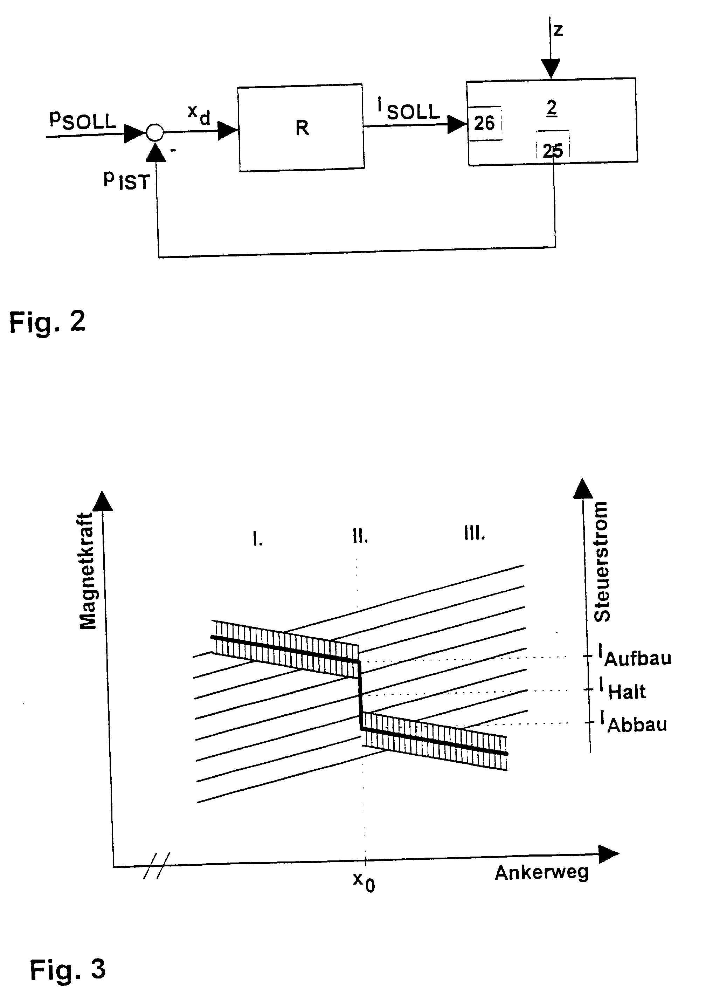

Der Betrieb des elektronisch steuerbaren Bremskraftverstärkers 21 in einem geschlossenen Regelkreis ist in Fig. 2 dargestellt. Dabei wird eine von der Regelstrecke, der Bremsdruckgebereinheit 2, ausgehende Regelgröße, der im Bremszylinder 25 erzeugte Bremsdruck $p_{IST}$, fortlaufend erfaßt und mit einer Führungsgröße, dem gewünschten Druckwert/-verlauf $p_{SOLL}$, verglichen. Das Ergebnis dieses Vergleichs ist eine Regelabweichung $x_d$, die einer Regeleinrichtung R zugeführt wird, wobei die Regeleinrichtung R Bestandteil der elektronischen Steuereinheit ECU sein kann. Die Stellgröße, die von der Regeleinrichtung R ausgeht, ist der die Elektromagnetanordnung 26 bestromende Steuerstrom $I_{SOLL}$. Bei den Störgrößen z handelt es sich vorwiegend um Einflüsse, die beispielsweise durch Reibungsverluste, Toleranzen, Temperaturschwankungen oder Schwankungen externer Reaktionskräfte, wozu insbesondere Schwankungen des Druckkraftanteils in der Unterdruckkammer 23 des Bremskraftverstärkers 21 zu zählen sind, hervorgerufen werden.

In dem Diagramm gemäß Fig. 3 ist auf der Abszisse der Weg und auf der Ordinate die auf den Anker der Elektromagnetanordnung 26 ausgeübte Magnetkraft aufgetragen, die sich in Abhängigkeit von dem Steuerstrom $I_{SOLL}$ ergibt. Hierbei handelt es sich um eine idealisierte schematische Darstellung, die sich auf einen Arbeitsbereich bezieht, der derart ausgelegt ist, daß ein proportionaler Zusammenhang zwischen Magnetkraft und Steuerstrom besteht. Weiterhin ist die Steuerkennlinie des elektronisch steuerbaren Bremskraftverstärkers 21 eingetragen. Diese Steuerkennlinie weist insgesamt drei Zweige auf. Bei dem senkrechten Zweig ist einer bestimmten Ankerposition $x_0$ eine Strombereich $I_{ABBAU} < I_{SOLL} < I_{AUFBAU}$ zugeordnet, wobei die Position $x_0$ genau der Haltestellung (II.) entspricht. Der sich nach links an den senkrechten Zweig anschließende geneigte Zweig gilt für einen Strom $I_{SOLL} > I_{AUFBAU}$ und steht für die Aufbaustellung (I.), während der von dem senkrechten Zweig nach rechts abgehende geneigte Zweig für einen Strom $I_{SOLL} < I_{ABBAU}$ gilt und die Abbaustellung (III.) charakterisiert.

Bedingt durch die bereits erwähnten durch Reibung, Toleranzen, Reaktionskräfte usw. hervorgerufenen Störeinflüsse, ist die Steuerkennlinie im Bereich der geneigten Zweige mit einem Streuband behaftet, was zu einer Verschiebung der Arbeitspunkte $I_{ABBAU}$ und $I_{AUFBAU}$ führt. Um diesem Problem in Bezug auf die Haltestellung (II.) entgegenzuwirken, wird vorzugsweise für $I_{HALT}$ ein Strom eingestellt, der sich als arithmetischer Mittelwert der Ströme $I_{ABBAU}$ und $I_{AUFBAU}$ ergibt. Dies und insbesondere ein Verfahren zum Lernen der die Arbeitspunkte bestimmenden Ströme $I_{ABBAU}$ und $I_{AUFBAU}$ ist durch die DE 195 27 493 A1 bekannt.

Nachteiligerweise ist das in der DE 195 27 493 A1 behandelte Verfahren darauf beschränkt, die Ströme $I_{ABBAU}$ und $I_{AUFBAU}$ lediglich bei jedem Fahrtantritt beim Einschalten der Zündung oder während der Fahrt in regelmäßigen Zeitabständen, sofern kein Ansteuerwunsch für den elektronisch steuerbaren Bremskraftverstärker 21 vorliegt, zu lernen und abzuspeichern. Liegt dann ein Ansteuerwunsch für den elektronisch steuerbaren Bremskraftverstärker 21 vor, so werden die auf diese Weise gelernten Stromwerte bei jedem Übergang von der Haltestellung (II.) in die Abbaustellung (III.) sowie bei jedem Übergang von der Haltestellung (II.) in die Aufbaustellung (I.) zur Vorgabe der ersten Stellgröße verwendet, um ein ausreichendes Regelverhalten zu erzielen. Wenn durch die vorgenannten Störeinflüsse nun während der Zeitdauer, für die ein Ansteuerwunsch für den elektronisch steuerbaren Bremskraftverstärker 21 anliegt, eine Verschiebung der Arbeitspunkte $I_{ABBAU}$ und $I_{AUFBAU}$ verursacht wird, kann sich ein träges Regelverhalten jeweils beim Übergang von der Haltestellung (II.) in die Abbaustellung (III.) bzw. in die Aufbaustellung (I.) ergeben, wodurch sich das Leistungsverhalten des elektronisch steuerbaren Bremskraftverstärkers 21 insgesamt verschlechtert. Dies trifft in besonderem Maße dann zu, wenn der Ansteuerwunsch für den elektronisch steuerbaren Bremskraftverstärker 21 für eine verhältnismäßig lange Zeitdauer anliegt, was bei Durchführung einer Antriebsschlupfregelung, einer Fahrdynamikregelung oder einer Abstandsregelung durchaus der Fall sein kann.

Zur Verbesserung des Leistungsverhaltens des elektronisch steuerbaren Bremskraftverstärkers ist deshalb eine Behebung dieses Nachteils erwünscht.

Das Verfahren basiert zunächst darauf, daß während einer Regelung bei jedem Zyklus, bei dem ausgehend von der Haltestellung (II.) die Aufbaustellung (I.) und/oder ausgehend von der Haltestellung (II.) die Abbaustellung (III.) eingenommen wird, der für den Übergang von der Haltestellung (II.) in die Aufbaustellung (I.) tatsächlich maßgebende Stromwert $I_{AUFBAU,IST}$ und/oder der für den Übergang von der Haltestellung (II.) in die Abbaustellung (III.) tatsächlich maßgebende Stromwert $I_{ABBAU,IST}$ erfaßt wird/werden, um in deren Abhängigkeit für den nächsten Zyklus oder die nächste Regelung den die Haltestellung (II.) definierenden höheren und/oder niedrigeren Stromwert $I_{AUFBAU,NEU}$, $I_{ABBAU,NEU}$ zu bestimmen.

Um Unklarheiten zu vermeiden, sei an dieser Stelle angemerkt, daß hier unter dem Begriff "Regelung" der Zeitraum für den ein Ansteuerwunsch für den elektronisch steuerbaren Bremskraftverstärker 21 vorliegt und unter dem Begriff "Zyklus" jeweils die Einstellung einer Aufbau-, Halte- oder Abbaustellung (I., II., III.) zwecks Modulation der Druckdifferenz an der beweglichen Wand 22 innerhalb einer "Regelung" zu verstehen ist.

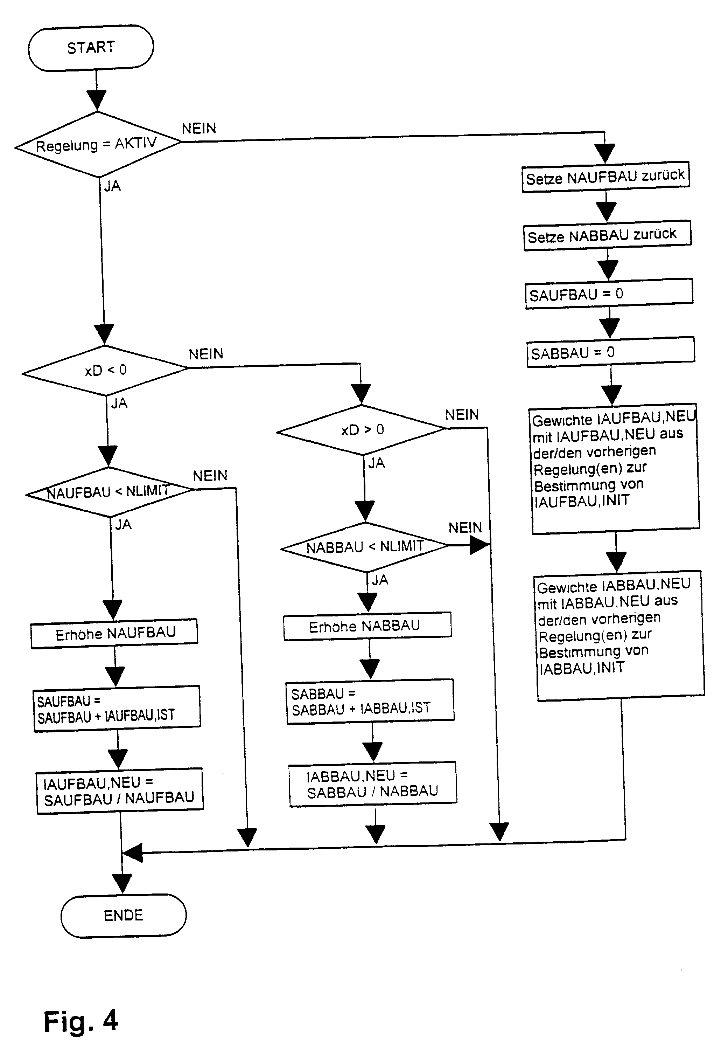

Vorteile und Ausgestaltungsmöglichkeiten werden nachfolgend anhand eines Ausführungsbeispiels erläutert. Dazu ist in Fig. 4 ein Flußdiagramm veranschaulicht.

Das Flußdiagramm nach Fig. 4 wird zyklisch durchlaufen wird. Dabei bedeutet $N_{AUFBAU}$ ein Zähler, der die Anzahl der Übergänge von der Haltestellung (II.) in die Aufbaustellung (I.) während einer Regelung, und $N_{ABBAU}$ ein Zähler, der die Anzahl der Übergänge von der Haltestellung (II.) in die Abbaustellung (III.) während einer Regelung erfaßt. Mit $S_{AUFBAU}$ ist eine Variable bezeichnet, in der die für den Übergang von der Haltestellung (II.) in die Aufbaustellung (I.) maßgebenden Stromwerte $I_{AUFBAU}$ während einer Regelung summiert werden. Entsprechend werden in $S_{ABBAU}$ die für den Übergang von der Haltestellung (II.) in die Abbaustellung (III.) maßgebenden Stromwerte $I_{ABBAU}$ während einer Regelung summiert. Wenn eine Regelung nicht aktiv ist bzw. beendet wird, erfolgt eine Initialisierung bzw. Reinitialisierung in der Weise, daß die Zähler $N_{AUFBAU}$ und $N_{ABBAU}$ zurückgesetzt werden und die Summenvariablen $S_{AUFBAU}$ und $S_{ABBAU}$ wieder auf Null gesetzt werden.

Ist eine Regelung aktiv, so wird zunächst unterschieden, ob es sich bei dem aktuellen Zyklus um einen Übergang von der Haltestellung (II.) in die Aufbaustellung (I.) oder um einen Übergang von der Haltestellung (II.) in die Abbaustellung (III.) handelt. Ist beides nicht der Fall, so wird der Durchlauf abgebrochen und mit dem nächsten Zyklus fortgesetzt.

Zur Unterscheidung, ob es sich um einen Übergang von der Haltestellung (II.) in die Aufbaustellung (I.) oder um einen Übergang von der Haltestellung (II.) in die Abbaustellung (III.) handelt, wird die Regelabweichung $x_d$ ausgewertet. Ist die Regelabweichung negativ ($x_d < 0$), also der Bremdruck $P_{IST}$ ist kleiner als der gewünschte Sollwert $P_{SOLL}$, so liegt ein Übergang von der Haltestellung (II.) in die Aufbaustellung (I.) vor. Ist dagegen die Regelabweichung positiv ($x_d > 0$), also der Bremdruck $p_{IST}$ ist größer als der gewünschte Sollwert $p_{SOLL}$, so liegt ein Übergang von der Haltestellung (II.) in die Abbaustellung (III.) vor.

Bei einem Übergang von der Haltestellung (II.) in die Aufbaustellung (I.) wird der Zähler $N_{AUFBAU}$ erhöht und der für den Übergang von der Haltestellung (II.) in die Aufbaustellung (I.) tatsächlich maßgebende Stromwert $I_{AUFBAU,IST}$, der zuvor erfaßt wurde, wird zu der Summenvariablen $S_{AUFBAU}$ addiert. Anschließend wird die Summenvariable $S_{AUFBAU}$ durch den Zähler $N_{AUFBAU}$ dividiert, und das Ergebnis als neuer die Haltestellung (II.) definierender höherer Stromwert $I_{AUFBAU,NEU}$ abgespeichert.

Analog wird bei einem Übergang von der Haltestellung (II.) in die Abbaustellung (III.) verfahren. Hier wird der Zähler $N_{ABBAU}$ erhöht und der für den Übergang von der Haltestellung (II.) in die Abbaustellung (III.) tatsächlich maßgebende Stromwert $I_{ABBAU,IST}$ in der Variablen $S_{ABBAU}$ summiert. Das Ergebnis der Division der Summenvariable $S_{ABBAU}$ durch den Zähler $N_{ABBAU}$ wird dann als neuer die Haltestellung (II.) definierender niedrigerer Stromwert $I_{ABBAU,NEU}$ abgespeichert.

Die Weiterbehandlung der so bestimmten neuen die Haltestellung (II.) definierenden höheren bzw. niedrigeren Stromwerte $I_{AUFBAU,NEU}$, $I_{ABBAU,NEU}$ kann auf unterschiedliche Methoden erfolgen.

Erstens kann der in dem aktuellen Zyklus ermittelte neue die Haltestellung (II.) definierende höhere Stromwert $I_{AUFBAU,NEU}$ bereits in dem nächstfolgenden Zyklus, bei dem ein Übergang von der Haltestellung (II.) in die Aufbaustellung (I.) erfolgt, bzw. der in dem aktuellen Zyklus neue die Haltestellung (II.) definierende niedrigere Stromwert

$I_{AUFBAU,NEU}$ bereits in dem nächstfolgenden Zyklus, bei dem ein Übergang von der Haltestellung (II.) in die Abbaustellung (III.) erfolgt, als erste Stellgröße vorgegeben werden. Auf diese Weise wird eine fortlaufende und somit sehr dynamische Anpassung an störeinflußbedingte Verschiebungen der Arbeitspunkte $I_{AUFBAU}$ bzw. $I_{ABBAU}$ erzielt.

Zweitens können die für den Übergang von der Haltestellung (II.) in die Aufbaustellung (I.) tatsächlich maßgebenden Stromwerte $I_{AUFBAU,IST}$ bzw. die für den Übergang von der Haltestellung (II.) in die Abbaustellung (III.) tatsächlich maßgebenden Stromwerte $I_{ABBAU,IST}$ nach Eintritt in eine Regelung zunächst für eine vorbestimmte Lernphase beobachtet werden, um erst in Anschluß an diese Lernphase den neuen die Haltestellung (II.) definierenden höheren bzw. niedrigeren Stromwert $I_{AUFBAU,NEU}$, $I_{ABBAU,NEU}$ als erste Stellgröße vorzugeben. Dabei bestehen dann die Möglichkeiten, entweder den in der Lernphase zu Beginn der Regelung bestimmten neuen die Haltestellung (II.) definierenden höheren bzw. niedrigeren Stromwert $I_{AUFBAU,NEU}$, $I_{ABBAU,NEU}$ bis zum Ende der Regelung als erste Stellgröße unverändert beizubehalten, oder während der Regelung mehrere Lernphasen aufeinanderfolgend ablaufen zu lassen und die dabei bestimmten neuen höheren bzw. niedrigeren Stromwert $I_{AUFBAU,NEU}$, $I_{ABBAU,NEU}$ jeweils als erste Stellgröße vorzugeben. Gegenüber der erstens genannten Methode findet hierbei zwar eine etwas weniger dynamische Anpassung an störeinflußbedingte Verschiebungen der Arbeitspunkte $I_{AUFBAU}$ bzw. $I_{ABBAU}$ statt, allerdings werden mögliche Ungenauigkeiten bei Erfassung der für den Übergang von der Haltestellung (II.) in die Aufbaustellung (I.) tatsächlich maßgebenden Stromwerte $I_{AUFBAU,IST}$ bzw. der für den Übergang von der Haltestellung (II.) in die Abbaustellung (III.) tatsächlich maßgebenden Stromwerte $I_{ABBAU,IST}$ kompensiert.

In dem Flußdiagramm nach Fig. 4 ist die Möglichkeit gezeigt, die Dauer der Lernphase über die Anzahl der Übergänge von der Haltestellung (II.) in die Aufbaustellung (I.) bzw. die Anzahl der Übergänge von der Haltestellung (II.) in die Abbaustellung (III.) zu bestimmen. Dabei wird der Zähler $N_{AUFBAU}$ bzw. $N_{ABBAU}$ mit einem vorherbestimmbaren Grenzwert $N_{LIMIT}$ verglichen. Wenn der Zähler $N_{AUFBAU}$ bzw. $N_{ABBAU}$ den Grenzwert überschreitet, so gilt die Lernphase als beendet, wobei der Durchlauf abgebrochen und mit dem nächsten Zyklus fortgesetzt wird.

Drittens kann vorgesehen werden, daß dann, wenn eine Regelung nicht aktiv ist bzw. beendet wird, der während der Regelung (zuletzt) bestimmte neue höhere bzw. niedrigere Stromwert $I_{AUFBAU,NEU}$, $I_{ABBAU,NEU}$ mit dem während der/den vorangegangenen Regelung/-en (zuletzt) bestimmten neuen höheren bzw. niedrigeren Stromwert/-en $I_{AUFBAU,NEU}$, $I_{ABBAU,NEU}$ gewichtet wird, um für die nächste Regelung einen höheren bzw. niedrigeren Stromwert $I_{AUFBAU,INIT}$, $I_{ABBAU,INIT}$ als Initialisierungswert zu bestimmen. Der so bestimmte Initialisierungswert wird dann im ersten Zyklus der nachfolgenden Regelung eingestellt.

Dabei kann die Gewichtung beispielsweise in Form einer Differenzengleichung über eine bestimmte Anzahl höherer bzw. niedrigerer Stromwerte $I_{AUFBAU,NEU}$, $I_{ABBAU,NEU}$ der vorangegangenen Regelungen erfolgen. Erfolgt beispielsweise die Gewichtung über 10 vorangegangene Regelungen, wobei einfach eine Mittelwertbildung durchgeführt wird, so werden die höheren bzw. niedrigeren Stromwerte $I_{AUFBAU,NEU}$, $I_{ABBAU,NEU}$ aus den vorangegangenen Regelungen jeweils mit dem Faktor 1/10 gewichtet.

$$I_{AUFBAU,INIT} = 1/10 * [\, I_{AUFBAU,NEU}(n) + I_{AUFBAU,NEU}(n-1) +$$

$$... + I_{AUFBAU,NEU}(n-9)\,]\ \text{bzw.}$$

$$I_{ABBAU,INIT} = 1/10 * [\, I_{ABBAU,NEU}(n) + I_{ABBAU,NEU}(n-1) +$$

$$... + I_{ABBAU,NEU}(n-9)\,]$$

Es kann aber auch vorgesehen werden, die Gewichtung mit unterschiedlichen Faktoren vorzunehmen. Beispielsweise, wenn über 2 vorangegangene Regelungen gewichtet wird, in der Weise, daß der höhere bzw. niedrigere Stromwert $I_{AUFBAU,NEU}$, $I_{ABBAU,NEU}$ aus der vorletzten Regelung mit dem Faktor 9/10 und der höhere bzw. niedrigere Stromwert $I_{AUFBAU,NEU}$, $I_{ABBAU,NEU}$ aus der letzten Regelung mit dem Faktor 1/10 gewichtet wird.

$$I_{AUFBAU,INIT} = 1/10 * I_{AUFBAU,NEU}(n) + 9/10 * I_{AUFBAU,NEU}(n-1)\ \text{bzw.}$$

$$I_{ABBAU,INIT} = 1/10 * I_{ABBAU,NEU}(n) + 9/10 * I_{ABBAU,NEU}(n-1)$$

Dadurch, daß der höhere bzw. niedrigere Stromwert $I_{AUFBAU,NEU}$, $I_{ABBAU,NEU}$ aus der vorletzten Regelung stärker gewichtet wird als der höhere bzw. niedrigere Stromwert $I_{AUFBAU,NEU}$, $I_{ABBAU,NEU}$ aus der letzten Regelung, besteht der Vorteil, daß ein einmaliger "Ausreißer" die Bestimmung des höheren bzw. niedrigeren Initialisierungswertes $I_{AUFBAU,INIT}$, $I_{ABBAU,INIT}$ nicht negativ beeinträchtigt, also eine gravierende sprunghafte Veränderung des höheren bzw. niedrigeren Initialisierungswertes $I_{AUFBAU,INIT}$, $I_{ABBAU,INIT}$ vermieden wird.

Als besonders vorteilhaft hat es sich in der Praxis erwiesen, die Gewichtung während der ersten 10 Regelungen mit identischen Gewichtungsfaktoren, also 1/10, vorzunehmen, und dann auf eine sich über 2 Regelungen erstreckende Gewichtung mit unterschiedlichen Gewichtungsfaktoren, also beispielsweise 9/10 und 1/10, überzugehen.

An dieser Stelle sei darauf hingewiesen, daß die in diesem Zusammenhang vorgeschlagene Gewichtung selbstverständlich in ähnlicher Weise jeweils auch bei der Bestimmung des neuen die Haltestellung (II.) definierenden höheren bzw. niedrigeren Stromwertes $I_{AUFBAU,NEU}$, $I_{ABBAU,NEU}$ anwendbar ist.

Abschließend seien folgende Vorteile, die sich beim erfindungsgemäßen Betrieb des elektronisch steuerbaren Bremskraftverstärkers ergeben, hervorgehoben.

Zum einen ergeben sich durch die optimale Bestimmung der Arbeitspunkte $I_{AUFBAU}$ bzw. $I_{ABBAU}$ kürzere Ansprechzeiten jeweils beim Übergang von der Haltestellung (II.) in die Aufbaustellung (I.) bzw. in die Abbaustellung (III.), wodurch das Leistungsverhalten des elektronisch steuerbaren Bremskraftverstärkers insgesamt in einem nicht unerheblichen Maße verbessert wird.

Zum anderen werden durch die Lernbarkeit Verschiebungen der Arbeitspunkte $I_{AUFBAU}$ bzw. $I_{ABBAU}$ selbstständig erkannt und korrigiert, so daß negative Auswirkungen von Langzeiteffekten eleminiert. Dies ist vor allem auch dann von Bedeutung, wenn ein Austausch der elektronischen Steuereinheit ECU oder des Bremskraftverstärkers 21 stattfindet, da im Anschluß daran die korrekten Arbeitspunkte $I_{AUFBAU}$ bzw. $I_{ABBAU}$ selbstständig eingestellt werden.

Weiterhin versteht es sich, daß der erfindungsgemäße Betrieb des elektronisch steuerbaren Bremskraftverstärkers besonders komfortabel hinsichtlich Geräuschentwicklung und Genauigkeit abläuft.

**Patentansprüche**

1. Elektronisch steuerbarer Bremskraftverstärker mit

   - einer Unterdruckkammer (23) und einer Druckkammer (24), die durch eine bewegliche Wand (22) voneinander getrennt sind,
   - einer Steuerventilanordnung, die mittels einer elektromagnetischen Betätigungseinrichtung (26) betätigbar ist, und durch die eine Druckdifferenz zwischen der Druck- und der Unterdruckkammer einstellbar ist, wobei
   - die Steuerventilanordnung in Abhängigkeit von einem durch die elektromagnetische Betätigungseinrichtung (26) fließenden Strom (I)

     -- eine Haltestellung, in der der Strom in einem Bereich zwischen einem höheren Wert ($I_{AUFBAU}$) und einem niedrigeren Wert ($I_{ABBAU}$) liegt, ohne daß die Steuerventilanordnung die Haltestellung verläßt,
     -- eine ersten Druckänderungsstellung, in der der Strom größer als der höhere Wert ($I_{AUFBAU}$) ist, und
     -- eine zweiten Druckänderungsstellung, in der der Strom niedriger als der niedrige Wert ($I_{ABBAU}$) ist,

     einnimmt,

   **dadurch gekennzeichnet, daß** durch geeignete Mittel während einer Regelung

   - bei jedem Wechsel der Steuerventilanordnung aus der Haltestellung in die erste oder die zweite Druckänderungsstellung oder bei jedem Wechsel aus der ersten oder der zweiten Druckänderungsstellung in die Haltestellung der Stromwert (I) erfaßt wird, bei dem der jeweilige Wechsel tatsächlich stattfindet, und
   - dieser erfaßte Stromwert (I) für die Festlegung des höheren Wertes ($I_{AUFBAU}$) bzw. des niedrigeren Wertes ($I_{ABBAU}$) der die Haltestellung definierenden Ströme für einen zukünftigen entsprechenden Wechsel der Steuerventilanordnung herangezogen wird.

2. Elektronisch steuerbarer Bremskraftverstärker nach Anspruch 1, **dadurch gekennzeichnet, daß**

   - die erste Druckänderungsstellung eine Druckaufbaustellung, und
   - die zweite Druckänderungsstellung eine Druckabbaustellung ist.

3. Elektronisch steuerbarer Bremskraftverstärker nach Anspruch 1 oder 2, **dadurch gekennzeichnet, daß** durch die geeigneten Mittel

- der jeweilige erfaßte Stromwert (I) für die Festlegung des höheren Wertes ($I_{AUFBAU}$) bzw. des niedrigeren Wertes ($I_{ABBAU}$) der die Haltestellung definierenden Ströme für einen zukünftigen Wechsel der Steuerventilanordnung aus der Haltestellung in die erste oder die zweite Druckänderungsstellung oder bei einem zukünftigen Wechsel aus der ersten oder der zweiten Druckänderungsstellung in die Haltestellung

während eines laufenden Regelvorganges herangezogen wird.

4. Elektronisch steuerbarer Bremskraftverstärker nach Anspruch 1, 2 oder 3, **dadurch gekennzeichnet, daß** durch die geeigneten Mittel

- der jeweilige erfaßte Stromwert (I) für die Festlegung des höheren Wertes ($I_{AUFBAU}$) bzw. des niedrigeren Wertes ($I_{ABBAU}$) der die Haltestellung definierenden Ströme für einen zukünftigen Wechsel der Steuerventilanordnung aus der Haltestellung in die erste oder die zweite Druckänderungsstellung oder bei einem zukünftigen Wechsel aus der ersten oder der zweiten Druckänderungsstellung in die Haltestellung

nach Beendigung des laufenden Regelvorganges in einem zukünftigen Regelvorgang herangezogen wird.

5. Elektronisch steuerbarer Bremskraftverstärker nach Anspruch 1, 2, 3 oder 4, **dadurch gekennzeichnet, daß** durch die geeigneten Mittel

- der jeweilige erfaßte Stromwert (I) für die Festlegung des höheren Wertes ($I_{AUFBAU}$) bzw. des niedrigeren Wertes ($I_{ABBAU}$) der die Haltestellung definierenden Ströme im Rahmen einer gewichteten Mittelwertbildung mit weiteren erfaßten Stromwerten zur Bildung eines gemittelten Stromwertes herangezogen wird.

6. Elektronisch steuerbarer Bremskraftverstärker nach Anspruch 1, 2, 3 oder 4, **dadurch gekennzeichnet, daß** durch die geeigneten Mittel

- der jeweilige erfaßte Stromwert (I) für die Festlegung des höheren Wertes ($I_{AUFBAU}$) bzw. des niedrigeren Wertes ($I_{ABBAU}$) der die Haltestellung definierenden Ströme im Rahmen einer gleitenden Mittelwertbildung mit weiteren erfaßten Stromwerten zur Bildung eines gemittelten Stromwertes herangezogen wird.

7. Elektronisch steuerbarer Bremskraftverstärker nach Anspruch 1, 2, 3, 4, 5 oder 6, **dadurch gekennzeichnet, daß** durch die geeigneten Mittel

- überprüft wird, ob der jeweilige erfaßte Stromwert (I) innerhalb eines vorbestimmten Toleranzbandes liegt oder mit einer derzeitigen Veränderungstendenz übereinstimmt, bevor der jeweilige erfaßte Stromwert (I) für die Festlegung des höheren Wertes ($I_{AUFBAU}$) bzw. des niedrigeren Wertes ($I_{ABBAU}$) der die Haltestellung definierenden Ströme zur Bildung eines gemittelten Stromwertes herangezogen wird.

**Claims**

1. An electronically controllable brake booster having

- a vacuum chamber (23) and a pressure chamber (24) which are separated from each other by a movable wall (22),
- a control valve arrangement which can be actuated by means of an electromagnetic actuation means (26), and by means of which a pressure difference between the pressure chamber and the vacuum chamber can be adjusted, with
- the control valve arrangement, as a function of a current (I) flowing through the electromagnetic actuation means (26),

  -- assuming a holding position in which the current ranges between a higher value ($I_{AUFBAU}$) and a lower value ($I_{ABBAU}$) without the control valve arrangement leaving the holding position,
  -- a first pressure changing position in which the current is higher than the higher value ($I_{AUFBAU}$), and
  -- a second pressure changing position in which the current is lower than the low value ($I_{ABBAU}$),

**characterised in that** by means of suitable means during a control

8

- upon each changeover of the control valve arrangement from the holding position into the first or the second pressure changing position, or upon each changeover from the first or the second pressure changing position into the holding position, the current value (I) is sensed at which the respective changeover actually takes place, and

- this sensed current value (I) is utilised for the specification of the higher value ($I_{AUFBAU}$) or the lower value ($I_{ABBAU}$), respectively, of the currents defining the holding position for a future corresponding changeover of the control valve arrangement.

2. The electronically controllable brake booster according to Claim 1, **characterised in that**

- the first pressure changing position is a pressure build-up position, and
- the second pressure changing position is a pressure relief position.

3. The electronically controllable brake booster according to Claim 1 or 2, **characterised in that** by way of the suitable means

- the respective sensed current value (I) for the specification of the higher value ($I_{AUFBAU}$) or the lower value ($I_{ABBAU}$), respectively, of the currents defining the holding position is utilised for a future changeover of the control valve arrangement from the holding position into the first or the second pressure changing position, or with a future control operation from the first or the second pressure changing position into the holding position

during a running control operation.

4. The electronically controllable brake booster according to Claim 1, 2, or 3, **characterised in that** by way of the suitable means

- the respective sensed current value (I) for the specification of the higher value ($I_{AUFBAU}$) or lower value ($I_{ABBAU}$), respectively, of the currents defining the holding position can be utilised for a future changeover of the control valve arrangement from the holding position into the first or the second pressure changing position, or with a future changeover from the first or the second pressure changing position into the holding position

after termination of the running control operation in a future control operation.

5. The electronically controllable brake booster according to Claim 1, 2, 3, or 4, **characterised in that** by way of the suitable means

- the respective sensed current value (I) for the specification of the higher value ($I_{AUFBAU}$) or lower value ($I_{ABBAU}$), respectively, of the currents defining the holding position is utilised within a weighted mean value generation with further sensed current values for the generation of an averaged current value.

6. The electronically controllable brake booster according to Claim 1, 2, 3, or 4, **characterised in that** by way of the suitable means

- the respective sensed current value (I) for the specification of the higher value ($I_{AUFBAU}$) or lower value ($I_{ABBAU}$), respectively, of the currents defining the holding position is utilised within a sliding mean value generation with further sensed current values for the generation of an averaged current value.

7. The electronically controllable brake booster according to Claim 1, 2, 3, 4, 5, or 6, **characterised in that** by way of the suitable means

- it is checked whether the respective sensed current value (I) lies within a predetermined tolerance band or is in agreement with a current change tendency, before the respective sensed current value (I) for the specification of the higher value ($I_{AUFBAU}$) or lower value ($I_{ABBAU}$), respectively, of the currents defining the holding position is utilised for the generation of an averaged current value.

**Revendications**

1.  Servofrein à commande électronique comprenant

    -   une chambre de dépression (23) et une chambre de pression (24) qui sont séparées l'une de l'autre par une paroi mobile (22),
    -   un dispositif de vanne de commande qui peut être actionné au moyen d'un dispositif d'actionnement électromagnétique (26) et par lequel une différence de pression entre la chambre de pression et la chambre de dépression peut être réglée,
    -   le dispositif de vanne de commande prenant, en fonction d'un courant (I) circulant dans le dispositif d'actionnement électromagnétique (26),

        --  une position de maintien dans laquelle le courant est dans une plage comprise entre une valeur supérieure ($I_{AUFBAU}$) et une valeur inférieure ($I_{ABBAU}$) sans que le dispositif de vanne de commande quitte la position de maintien,
        --  une première position de changement de pression dans laquelle le courant est supérieur à la valeur supérieure ($I_{AUFBAU}$), et
        --  une deuxième position de changement de pression dans laquelle le courant est inférieur à la valeur inférieure ($I_{ABBAU}$),

    **caractérisé en ce que**, par des moyens appropriés pendant une régulation,

    -   à chaque passage du dispositif de vanne de commande de la position de maintien à la première ou à la deuxième position de changement de pression ou à chaque passage de la première ou de la deuxième position de changement de pression à la position de maintien on relève l'intensité du courant (I) à laquelle le passage respectif a lieu effectivement, et
    -   cette intensité de courant relevée (I) est utilisée pour fixer la valeur supérieure ($I_{AUFBAU}$) respectivement la valeur inférieure ($I_{ABBAU}$) des courants définissant la position de maintien pour un passage correspondant ultérieur du dispositif de vanne de commande.

2.  Servofrein à commande électronique selon la revendication 1, **caractérisé en ce que**

    -   la première position de changement de pression est une position d'augmentation de pression, et
    -   la deuxième position de changement de pression est une position de réduction de pression.

3.  Servofrein à commande électronique selon la revendication 1 ou 2, **caractérisé en ce que** par des moyens appropriés

    -   l'intensité de courant (I) respectivement relevée est utilisée pour fixer la valeur supérieure ($I_{AUFBAU}$) respectivement la valeur inférieure ($I_{ABBAU}$) des courants définissant la position de maintien pour un passage ultérieur du dispositif de vanne de commande de la position de maintien à la première ou la deuxième position de changement de pression ou pour un passage ultérieur de la première ou de la deuxième position de changement de pression à la position de maintien

    pendant un processus de régulation en cours.

4.  Servofrein à commande électronique selon la revendication 1, 2 ou 3, **caractérisé en ce que** par des moyens appropriés

    -   l'intensité de courant (I) respectivement relevée est utilisée pour fixer la valeur supérieure ($I_{AUFBAU}$) respectivement la valeur inférieure ($I_{ABBAU}$) des courants définissant la position de maintien pour un passage ultérieur du dispositif de vanne de commande de la position de maintien à la première ou la deuxième position de changement de pression ou pour un passage ultérieur de la première ou de la deuxième position de changement de pression à la position de maintien

    après la fin du processus de régulation en cours dans un processus de régulation ultérieur.

5.  Servofrein à commande électronique selon la revendication 1, 2, 3 ou 4, **caractérisé en ce que** par des moyens appropriés

- l'intensité de courant (I) respectivement relevée est utilisée pour fixer la valeur supérieure ($I_{AUFBAU}$) respectivement la valeur inférieure ($I_{ABBAU}$) des courants définissant la position de maintien dans le cadre d'un calcul de valeur moyenne pondérée avec d'autres intensités de courant relevées pour calculer une intensité de courant moyenne.

6. Servofrein à commande électronique selon la revendication 1, 2, 3, 4 ou 5, **caractérisé en ce que** par des moyens appropriés

- l'intensité de courant (I) respectivement relevée est utilisée pour fixer la valeur supérieure ($I_{AUFBAU}$) respectivement la valeur inférieure ($I_{ABBAU}$) des courants définissant la position de maintien dans le cadre d'un calcul de valeur moyenne glissante avec d'autres intensités de courant relevées pour calculer une intensité de courant moyenne.

7. Servofrein à commande électronique selon la revendication 1, 2, 3, 4, 5 ou 6, **caractérisé en ce que** par des moyens appropriés

- on vérifie si l'intensité de courant (I) respective relevée se trouve à l'intérieur d'une plage de tolérance prédéterminée ou concorde avec une tendance de variation actuelle avant d'utiliser l'intensité de courant (I) respectivement relevée pour fixer la valeur supérieure ($I_{AUFBAU}$) respectivement la valeur inférieure ($I_{ABBAU}$) des courants définissant la position de maintien pour calculer une intensité de courant moyenne.

Fig. 1

**Fig. 2**

**Fig. 3**

**Fig. 4**